# EUROPEAN PATENT SPECIFICATION

(11) **EP 2 522 599 B1**
(45) Date of publication and mention of the grant of the patent: **13.11.2013**
(21) Application number: 12167614.2
(22) Date of filing: 11.05.2012
(51) Int. Cl.: B65G 1/04

(54) **Manipulator for the handling in particular of substantially parallelepipedal or cylindrical bodies in an automated storage system**
Manipulator zur Handhabung insbesondere von im wesentlichen quaderförmigen oder zylindrischen Körpern in einer automatisierten Speichersystem
Manipulateur pour la manutention, en particulier de corps essentiellement parallélépipédiques ou cylindriques dans un système de stockage automatisé

(30) Priority: 13.05.2011 IT PD20110151
(43) Date of publication of application: 14.11.2012
(73) Proprietor: Label Elettronica S.R.L., 35010 Limena (PD) (IT)
(72) Inventor: Rami, Enrico, 35133 PADOVA (IT); Rami, Margherita, 35133 PADOVA (IT)
(74) Representative: Modiano, Micaela Nadia

(56) References cited:
- EP-A1- 2 163 507
- DE-A1-102005 029 398
- DE-A1-102007 013 481

## Description

The present invention relates to a manipulator for the handling in particular of substantially parallelepipedal or cylindrical bodies in an automated storage system, according to the preamble of claim 1. Such a manipulator is disclosed by EP-A-2163507.

In particular, the invention is intended for use in an automated storage system for managing supplies of packages of medicines and the like.

Nowadays the use is known of robotized storage systems for managing packages of medicines in pharmacies or in hospitals.

These comprise shelving with channels inclined so as to provide a chute with respect to the horizontal plane, in which the packages of medicines are stored by a manipulator.

The packages indicated by the operator are automatically expelled on demand from such channels.

In order to refill the inclined channels, the manipulator takes the packages from a conveyor belt or from storage shelves, known as low product rotation shelves, and places them in the channels of the shelving or drops them into the adapted chute for direct withdrawal by the operator.

The low rotation storage shelves can act as a storage unit for resupplying the inclined channels, which are commonly known as high rotation shelves, as products can be stored on them that are less often used than those arranged on the inclined channels.

The manipulator is moved by means of translational motion that position it at the conveyor belt, storage shelves or inclined channels.

Manipulators are known today which rotate with respect to a vertical axis in order to be oriented and re-oriented so as to alternately face toward the storage shelves or conveyor belt, from which to grip the packages, or toward the channels in which to drop the gripped packages.

A need that is particularly felt today in the field of robotized storage systems is that of ensuring an effective hold, or grip, of the packages for their handling by the manipulator.

Today, in order to grip the packages, the manipulator is preferably provided with a clamp-like device.

Such clamp-like device is generally previously arranged on a supporting plate for the packages to be transported, and the plate in turn is supported by an assembly for moving the manipulator in its entirety.

The clamp-like device comprises two mutually opposite blades, i.e. two flat bars arranged substantially at right angles to the arrangement of the supporting plate, first means of translational motion for such blades, in a first direction X identified as the direction toward a facing conveyor belt or storage shelf, and second means of translational motion for such blades, in a second direction Y identified as the direction at right angles to X of mutual approach of the blades for the gripping of one or more packages, and of mutual distancing for the release of the packages once they have been loaded or unloaded from the supporting plate.

The blades are long enough to be capable of being inserted between two rows of packages on a shelf to a depth that corresponds to the depth of such shelf, generally a few dozen centimeters, for the gripping of the package arranged on the shelf which is farthest from the supporting plate.

Two neighboring rows of packages are arranged side by side so that between them there is a space the width of which is less than two centimeters, for the passage of the gripping blades, and the clamping thereof on the package or on the plurality of packages to be gripped.

Such space of approximately two centimeters between two rows of packages side by side determines a major reduction overall of the effective storage space on the shelf, which is designed to support many rows of packages, and such reduction is due precisely to such spaces which must exist between two consecutive rows of packages.

Such two centimeters are however the result of the limitations of conventional manipulators.

In fact the most recent manipulators are equipped with blades that are provided with means that enable a controlled, and contained, rotation thereof toward each other in order to determine a better hold on the package to be gripped. Such rotation, precisely because of the lack of an adequate space between two rows of packages on a shelf, is usually performed before the blades are translationally moved in the direction X to be arranged in the spaces between two rows of packages, and once the blades are placed at the sides of the row of packages, they are translationally moved along the direction Y so as to grip the package or packages.

Such blades, which are a few dozen centimeters in length, since they must not flex if they are to maintain sufficient hold on the bodies to be gripped, have an average thickness of approximately six millimeters. The convergence imposed on the blades by the mutual rotation before the insertion in the gripping spaces between two rows of packages, although slight, is what determines the aforementioned approximately two centimeters of space necessary between two side by side rows of packages.

The aim of the present invention is to provide a manipulator for the handling in particular of substantially parallelepipedal or cylindrical bodies in an automated storage system, which is capable of overcoming the above mentioned drawbacks of conventional manipulators.

Within this aim, an object of the invention is to provide a manipulator that makes it possible to arrange the packages in storage so as to optimize the spaces available on the shelves.

Another object of the invention is to provide a manipulator that is capable of performing single or multiple grips in the manner of conventional manipulators.

Another object of the invention is to provide a manipulator of no less efficiency and versatility than conventional manipulators.

Another object of the invention is to provide a manipulator for the handling in particular of substantially parallelepipedal or cylindrical bodies in an automated storage system that is structurally simple and easy to use, and which can be produced using known systems and technologies.

This aim and these and other objects which will become better apparent hereinafter are achieved by a manipulator for the handling in particular of substantially parallelepipedal or cylindrical bodies in an automated storage system, of the type comprising a clamp-like grip device, which is previously arranged on a plate for supporting parallelepipedal or cylindrical bodies to be transported, said plate being in turn supported by an assembly for moving said manipulator, said clamp-like device comprising two mutually opposite blades, first means of translational motion of said blades in a first direction identified as the direction toward a facing conveyor belt or storage shelf, and second means of translational motion in a second direction identified as the direction at right angles to said first direction, of mutual approach of the blades for the gripping of one or more parallelepipedal or cylindrical bodies, and of mutual distancing for the releasing of said parallelepipedal or cylindrical bodies once they have been loaded or unloaded from the supporting plate, said manipulator being **characterized in that** said clamp-like grip device has
- a first high-rigidity grip blade, which performs a translational motion only in the first direction by way of first means of translational motion,
- a second grip blade, which is also high-rigidity, is thinner than the first blade, and is translationally moveable both in the first direction together with said first blade, with said first means of translational motion, and in the second direction toward or away from said first blade, by said second means of translational motion,
said second blade being able to rotate, with rotation means, about a pivot thereof with an axis that is substantially perpendicular to the plane defined by said first direction and said second direction, said rotation means being supported by the second means of translational motion along said second direction.

Further characteristics and advantages of the invention will become better apparent from the description of a preferred, but not exclusive, embodiment of the manipulator according to the invention, which is illustrated by way of non-limiting example in the accompanying drawings wherein:
Figure 1 is a perspective view of the manipulator according to the invention supported by means for the movement thereof within an automated storage system;
Figure 2 is a first perspective view of a manipulator according to the invention;
Figure 3 is a second perspective view of a manipulator according to the invention;

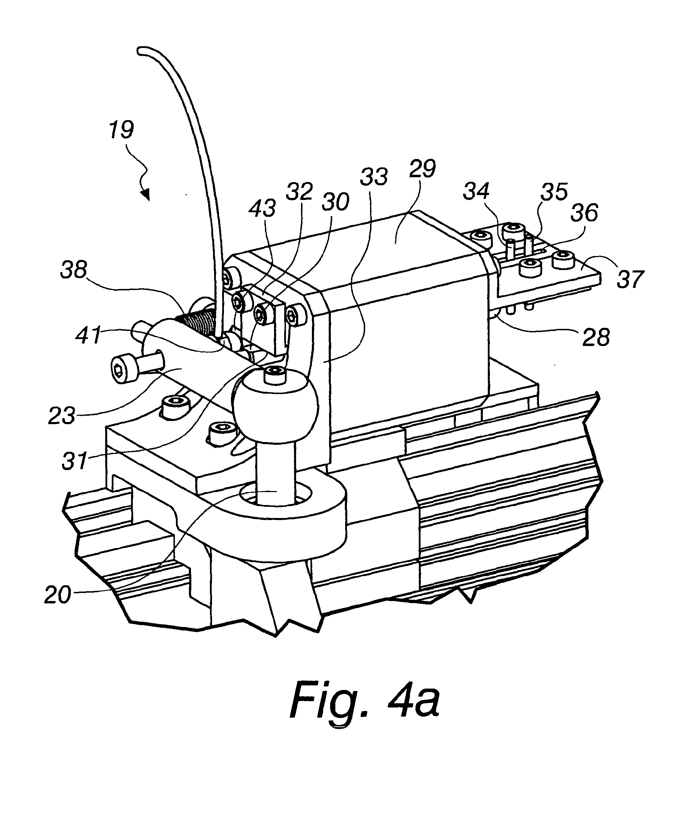

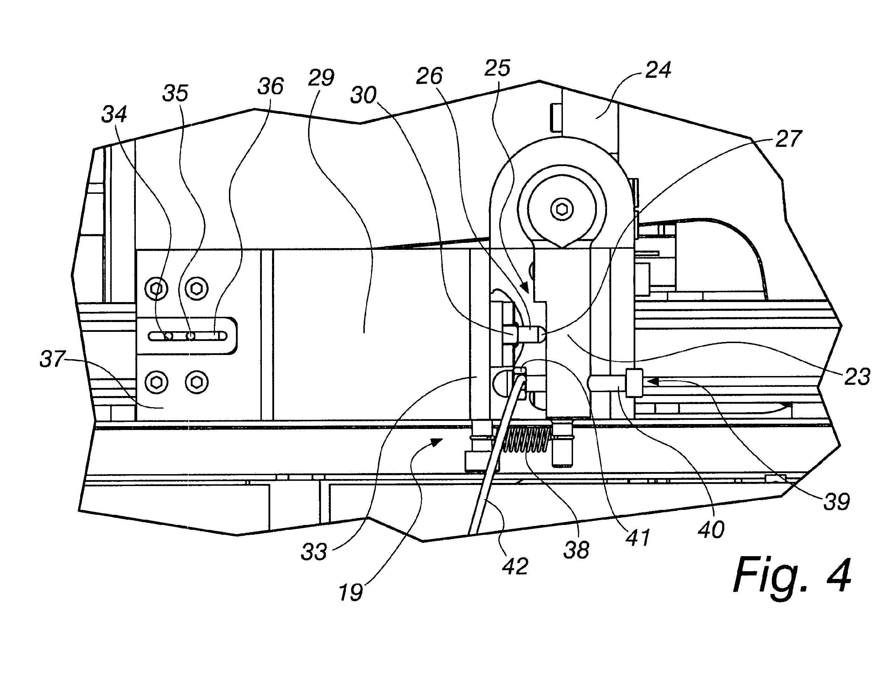

Figure 4 is a view from above of a detail of the manipulator according to the invention;
Figure 4a is a perspective view of the detail in Figure 4;
Figure 5 is a third perspective view of a manipulator according to the invention;
Figures 6 to 8 each schematically represent a step of the operation of the manipulator according to the invention.

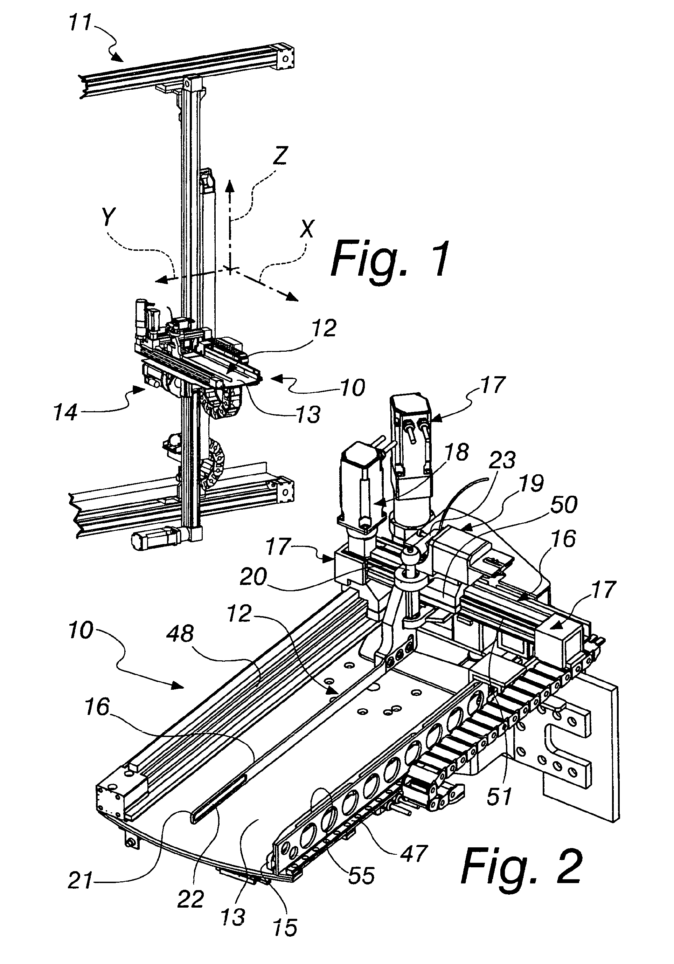

With reference to the figures, a manipulator for the handling in particular of parallelepipedal or cylindrical bodies in an automated storage system according to the invention is generally designated with the reference numeral 10, while a generic automated storage system is shown schematically by the representation of the means 11 for moving the manipulator 10 in the two directions indicated with Y and Z in Figure 1.

The manipulator 10 is of the type comprising a clamp-like grip device 12, the latter being previously arranged on a plate 13 for resting parallelepipedal or cylindrical bodies, for example packages of medicines, to be transported.

The plate 13 is in turn supported by an assembly for moving 14 the manipulator 10, which is described in more detail below.

The clamp-like device 12 comprises two mutually opposite blades 15 and 16 respectively, where the term "blades" is intended to mean two flat bars arranged substantially at right angles with respect to the arrangement of the supporting plate 13.

The clamp-like device 12 also comprises first means 17 of translational motion for the blades in a first direction X, as in Figure 1, identified as the direction toward a facing conveyor belt or storage shelf, and second means 18 of translational motion, in a second direction Y, identified as the direction at right angles to the first direction X of mutual approach of the blades 15, 16, for the gripping of one or more parallelepipedal or cylindrical bodies, and of mutual distancing for the releasing of the parallelepipedal or cylindrical bodies once loaded or unloaded from the supporting plate 13.

The clamp-like grip device 12, in particular, has
- a first high-rigidity grip blade 15, which performs a translational motion only in the first direction X by way of first means of translational motion 17,
- a second grip blade 16, which is also high-rigidity, is thinner than the first blade 15, and is translationally moveable both in the first direction X together with the first blade 15, with the first means of translational motion 17, and in the second direction Y toward or away from the first blade 15, by the second means of translational motion 18.

The second blade 16 is able to rotate, with rotation means 19, about a pivot 20 thereof with an axis substantially perpendicular to the plane defined by the first direction X and the second direction Y.

The rotation means 19 are supported by the second means of translational motion 18 along the second direction Y.

The second blade 16 is made of a material with high resistance to flexure, and preferably of carbon fiber, and is approximately half as thick as the first blade 15.

So if, for example, the first blade 15, made of steel, is six millimeters thick, then the second blade 16, made of carbon fiber, is approximately three millimeters thick.

The second blade 16, at a portion of the free end 16 thereof, has a grip area 22 with increased grip.

The rotation means 19 are constituted by a maneuvering bar 23 which is elongated radially from the pivot 20, the second blade 16 being fixed to the pivot 20 in a cantilever fashion and by interposition of a supporting bracket 24.

The maneuvering bar 23 is rotated by corresponding linear actuation means, which are described below in an embodiment thereof which is intended to be by way of non-limiting example of the invention.

The linear actuation means are constituted by pusher means 25, which are electrically motorized and adapted to act on the maneuvering bar 23 in order to rotate the second blade 16.

Elastic contrast means are provided for the return of the maneuvering bar 23 in the mutually parallel arrangement of the second blade 16 with respect to the first blade 15.

The aforementioned pusher means 25 comprise a threaded pusher bar 26, with hemispherical head 27, which is made to translationally move by a female-thread rotor element 28, which is internally threaded complementarily to the threading of the pusher bar 26 and is rotated by an associated electric motor 29.

The pusher bar 26 is associated with rotation-preventing means in order to prevent its rotation about its own longitudinal axis.

Such rotation-preventing means of the pusher bar 26 are constituted
- by a flattened portion 30 of the pusher bar 26 which is proximate to the hemispherical head 27 and is adapted to slide on a corresponding rotation-preventing surface provided by a flat face 31 of a plate 32 which is fixed to a first flange 33 that supports the electric motor 29,
- and, at the opposite end of the pusher bar 26, by two radial pins 34 and 35 that pass through the pusher bar 26 and are arranged so as to perform a translational motion in a corresponding guiding slot 36 defined on a second flange 37, which is fixed to the body of the electric motor 29 on the opposite side with respect to the first flange 33.

The elastic contrast means for the return of the maneuvering bar 23 to the position in which the second blade 16 is parallel to the first blade 15 are constituted by a traction spring 38, which is interposed between the first flange 33 and the maneuvering bar 23.

Means 39 for indicating that the mutually parallel arrangement of the first blade 15 and the second blade 16 has been restored are associated with the maneuvering bar 23.

The means of restoration comprise an adjustment screw 40, for example made of plastic, suitably set.

At its end the screw 40 has a nut with spherical cap 41, onto which an electrical cable 42 is soldered, which touches the first flange 33 of the motor in a contact region 43 when the second blade 16 is parallel to the first blade 15, thus producing the closing of an electric circuit that signals that such position has been reached. The lack of contact of the pusher bar 26 with the maneuvering bar 23 is intended to prevent very small accidental shifts of the pusher bar 26 from opening the aforementioned electric circuit, when the second blade 16 can still be considered parallel to the first blade 15.

The first means of translational motion 17 for the blades 15, 16 in the first direction X are constituted by two mutually opposite lateral sliders 45, 46, which are joined by a transverse element and are adapted to perform a translational motion on corresponding lateral guides 47, 48 that run in parallel on two opposite sides of the plate 13.

A first one of the lateral guides, for example the guide 48, is associated with means for movement in the first direction X, for example a recirculating ball guide with motorized belt.

The second means of translational motion 18 are defined by a third slider 50, on which is mounted the second blade 16 with the respective rotation means 19, the third slider 50 being arranged so as to perform a translational motion on an additional third corresponding guide 51, which is transverse to the first two guides 47, 48 and defines the transverse element for joining the two first guides.

The third slider 50 is associated with corresponding means for movement in the second direction Y on the third guide 51, for example the third guide 51 is a recirculating ball guide with motorized belt.

By way of example, the use of the manipulator according to the invention in an automated storage system for medicines is the following.

Within the automated storage system the manipulator 10 withdraws the medicines that advance on a conveyor belt in steps, after having identified their type by a barcode reader and their size by sensors provided on a timing bar.

The manipulator 10 makes it possible to store the medicines in "low-rotation" modules and in "high-rotation" modules, depending on whether they have a high or low turnover.

The low-rotation modules are constituted, for example, by horizontal shelves made of tempered glass, while the high-rotation modules are constituted by shelves inclined by 24° comprised of channels made of aluminum alloy and provided, at the lower end, with a mechanical arrester and expeller.

The manipulator 10 makes it possible for the following steps to be executed:
- withdrawing the medicines from the inbound belt,
- depositing in and withdrawing from low-rotation modules,
- depositing in high-rotation modules.

In order to withdraw the medicines from the inbound belt, the manipulator 10 is positioned at the medicine introduced, or the first medicine if a series of medicines are introduced, with the plate 13 at the same height as the surface of the belt.

If the introduction of medicines continues, the manipulator 10 performs a translational motion in steps in the second direction Y, i.e. parallel to the belt, so as to cancel out the relative motion between manipulator 10 and medicine.

At this point the two grip blades 15 and 16 advance simultaneously toward the medicine until the first blade 15, which is longer than the second blade 16, covers all of its length.

The gripping occurs via the approach and subsequent pressure of the second blade 16, which is provided with an area of increased friction 22 at the end, while the first blade 15 is completely smooth, against the opposite face of the package with respect to the face that rests against the first blade 15.

The manipulator 10 then completely retracts the blades 15 and 16, bringing the package to the edge.

The positioning of the manipulator 10 at the medicine to be withdrawn from the belt occurs by way of an adapted combination of movements along the axes Y and Z of the means 11 by which it is moved.

The gripping of the medicine occurs by tightening the second blade 16 against the medicine, which, as mentioned, abuts against the first blade 15.

The pressure exerted by the second blade 16 is achieved by way of a combined rotary and translational motion of the second blade 16 when it is proximate to the medicine.

The rotation of the second blade 16 is achieved by rotating the pivot 20, and thus the bracket 24 that supports the second blade 16, by a few degrees.

The continuous contact of the pusher bar 26 with the maneuvering bar 23 of the second blade 16 is ensured by the traction spring 38, which is necessary when the pusher bar 26 performs a translational motion in the opposite direction to the pushing direction, since it makes it possible for the second blade 16 to return to the parallel arrangement with the first blade 15.

Once the mutually parallel arrangement has been reached, the threaded pusher bar 26 retreats further without this causing a divergence of the second blade 16 with respect to the first blade 15, due to the presence of the screw 40 with nut with spherical cap 41, which defines a stroke limit for the return rotation of the maneuvering bar 23.

Above the first blade 15 and parallel to it, but shifted slightly outward, there is a side rail 55, made of polyethylene, for accompanying packages, which acts as a guide for the taller packages when they are translationally moved aboard the manipulator 10.

In order to deposit in and withdraw from low-rotation modules, the withdrawal of the low-rotation medicine from the belt is followed by the depositing in the corresponding module.

In this step the manipulator 10 is positioned at a level that is slightly higher than the level of the glass shelf where it deposits articles, in order to compensate for the inevitable inflexion of the plate 13 of the manipulator 10 following the advancement of the blades 15 and 16.

Such raised position thus prevents the package carried by the blades 15 and 16 from stumbling on the shelf, an event that would obstruct the storage thereof.

The shelf and the position thereon where the medicine is to be deposited are determined by way of software based on the dimensions detected during the introduction thereof into storage, and on the space available on the shelves.

The deposit position is reached with adapted translational motions of the manipulator along the axes Y and Z if the medicine is to be placed in one of the modules on the inbound belt side. If the medicine is to be placed in one of the modules located on the side opposite to that of the inbound belt, then a rotation of 180° is added to the translational motions along the axes Y and Z.

The rotation of the plate 13 of the manipulator 10 occurs about a vertical axis, located at the center of the corridor of the storage space so that the end tip of the plate 13 is at the same distance from the shelves of the modules on both sides.

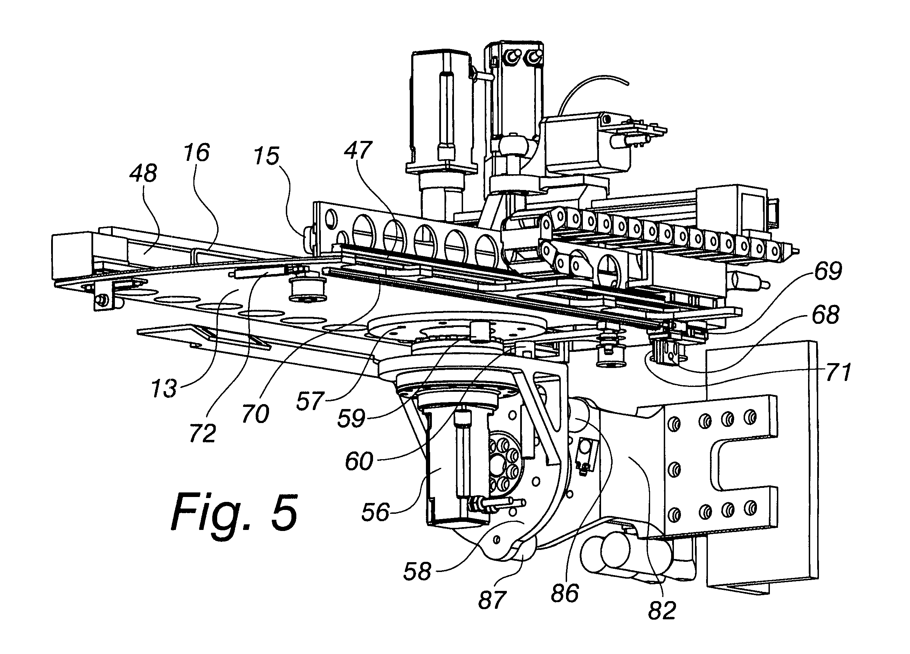

Such rotation occurs by way of a gear motor 56, clearly visible in Figure 5, which is connected, by way of screws, to a flange 57 that supports the plate 13, and to an L-shaped bracket 58 that remains fixed during the depositing and withdrawal of medicines in and from low-rotation modules.

Interposed between the flange 57 and the bracket 58 are cylindrical stops 59 and 60 which act as a mechanical stroke limit, a first stop 59 being integral with the flange 57 and a second stop 60 being integral with the bracket 58.

The withdrawal of packages from the low-rotation module is divided into two types: single withdrawal, where a single medicine is retrieved, the first in the row, and multiple withdrawal (multipicking), where two or more medicines are taken from the same row.

Multiple withdrawal moreover can be single-code or multi-code, depending on whether it is made up of the same medicines or not.

In multi-code rows the medicines are sorted so that the width increases with the depth of the shelf.

This type of row makes it possible to increase the storage capacity of the automated storage system.

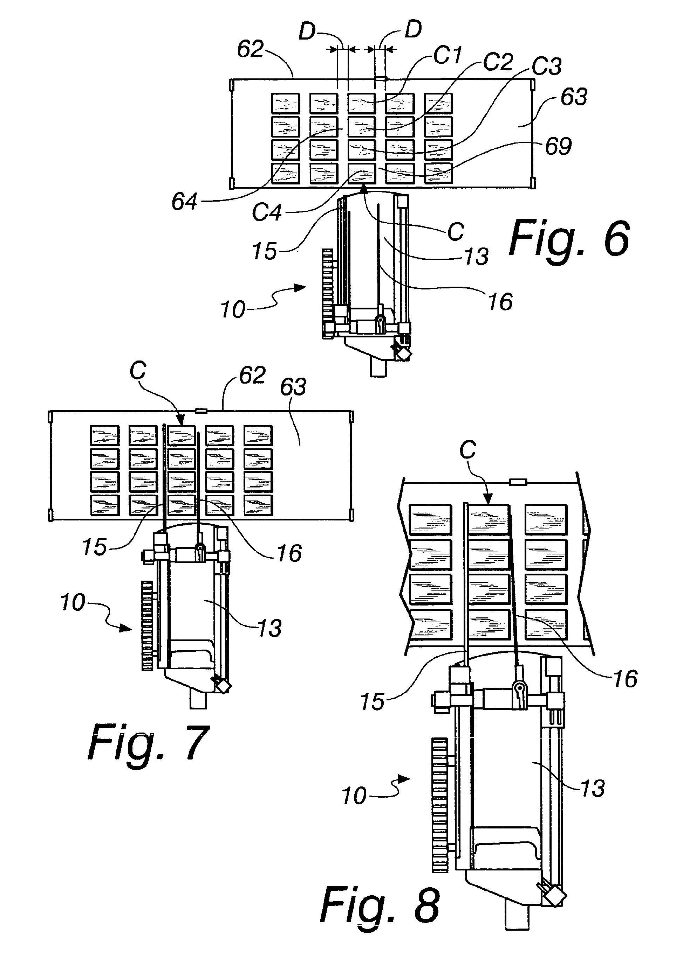

Figures 6 to 8 show an example of a multi-grip movement, by the manipulator 10, for gripping a row of packages C1, C2 etc.

The distance D between two neighboring rows of packages defines the passage space for the blades 15 and 16.

Figure 7 shows the blades 15 and 16 arranged to surround the row of packages C, with the longer blade 15 in abutment against the rear rail 62 of the shelf 63.

Once the blades 15 and 16 are inserted in the spaces 64 and 65 at the sides of the row of packages C, the second blade 16 is translationally moved and rotated by a few degrees, as shown in Figure 8, so as to determine the grip of the row of packages C.

Thanks to the structure of the blades, 15 which is non-rotating and 16 which is able to rotate and of very reduced thickness, the distance D can be greatly reduced with respect to the corresponding distance defined when using conventional manipulators, for example the distance D is approximately one centimeter as against the eighteen millimeters necessary when using conventional manipulators.

This makes it possible to optimize the storage of packages on the shelves for low-rotation medicines.

In single withdrawals from low-rotation modules, similarly to what occurs when withdrawing from the belt, the manipulator 10 is positioned with the plate 13 at the same height as the shelf, advances with the blades, and grips the medicine. However, before bringing the medicine on board, the manipulator 10 is lowered by a configurable value, generally a couple of millimeters, in order to prevent the medicine from stumbling on the plate 13. This lowering makes it possible to compensate for the inflexion of the shelf, which is maximal at the center, that makes it deviate from perfect planarity. This phenomenon is negligible when gripping from the inbound belt.

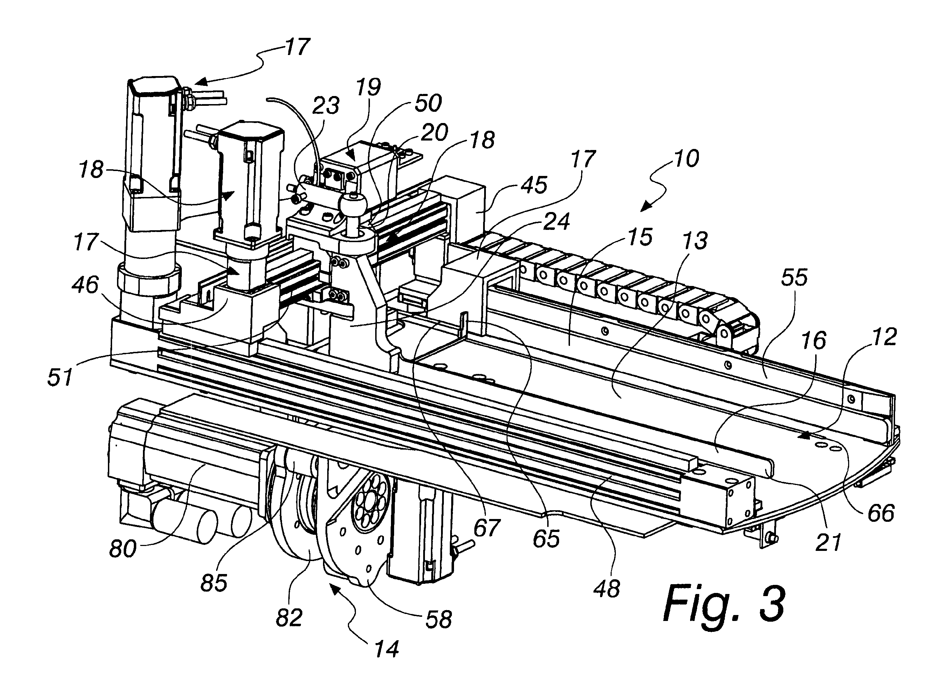

The subsequent expulsion of the medicine by the manipulator in order to drop it into conveyor chutes occurs by way of a pusher 65 that slides along a slot 66 defined on the plate 13, as shown in Figure 3.

The pusher 65 is constituted by a lamina made of polyethylene screwed to a rod 67 that is fixed, with an angle bar 68 visible in Figure 5, to two trolleys 69 of a recirculating ball guide 70.

The corresponding movement occurs by way of a motorized belt which is connected to the rod 67 by means of a plate 71, which is screwed.

Moreover it is possible to check the number of packages of medicines loaded in the manipulator with the assistance of the pusher, which pushes them until the one closest to the tip of the blades 15 and 16 triggers a laser sensor 72 that is present on the edge of the plate 13.

The calculation of the quantity thereof occurs based on the travel that is necessary for the pusher to make for the medicine at the tip to intersect the laser border. This check is optional in the single withdrawal.

If one or more of the medicines to be withdrawn which belong to a multi-code row are preceded by one or more other medicines, the manipulator 10 will advance with the blades to the last medicine of interest and perform the withdrawal of the products up to that medicine. After using the pusher to check the number of medicines loaded, the medicines required are dropped on the chutes, while the unwanted medicines remain aboard and are made to advance by the pusher until the medicine closest to the tip of the blades intersects the aforementioned laser border.

At this point the manipulator redeposits the medicines that are not required in optimal positions given their dimensions and the available space.

In order to deposit in high-rotation modules, the manipulator 10, with the medicine present on the belt gripped at the tip of the blades, rotates about the axis Z by 156°, i.e. by 180° minus the 24° corresponding to the inclination of the chutes of the high-rotation modules, and moves it forward of the first blade 15 by a configurable value. This operation assists the subsequent introduction of the package into the associated channel, such introduction occurring after tilting of the manipulator by 90° about an axis X and release of the grip by the blades; the medicine, in fact, slides by gravity along the first blade 15, which has no grip area 22, and then enters the channel.

The tilting occurs by way of a gear motor 8, which is visible in Figure 3 and connected, by way of screws, to the L-shaped bracket 58.

A Z-shaped support 81 is anchored to the trolley 82 for coupling to the means 11.

Between the support 82 and the L-shaped bracket 58 stops 85, 86 and 87 are provided, which act as a mechanical stroke limit.

The shorter length of the second blade 16 with respect to the first blade 15 is intended to prevent it from colliding with the higher high-rotation shelf when it is being opened in order to release the medicine.

In practice it has been found that the invention fully achieves the intended aim and objects.

In particular, with the invention a manipulator is provided that makes it possible to arrange the packages in storage so as to optimize the spaces available on the shelves.

What is more, with the invention a manipulator is provided that is capable of performing single or multiple grips in the manner of conventional manipulators.

Moreover, with the invention a manipulator is provided which is of no less efficiency and versatility than conventional manipulators.

Last but not least, with the invention a manipulator for the handling in particular of substantially parallelepipedal or cylindrical bodies in an automated storage system is provided that is structurally simple and easy to use, and which can be produced using known systems and technologies.

The invention, thus conceived, is susceptible of numerous modifications and variations, all of which are within the scope of the appended claims.

In practice the materials employed, as well as the contingent dimensions and shapes, may be any according to requirements and to the state of the art.

## Claims

1. A manipulator (10) for the handling in particular of substantially parallelepipedal or cylindrical bodies in an automated storage system (11), of the type comprising a clamp-like grip device (12), which is previously arranged on a plate (13) for supporting parallelepipedal or cylindrical bodies to be transported, said plate (13) being in turn supported by an assembly (14) for moving said manipulator (10), said clamp-like device (12) comprising two mutually opposite blades (15, 16), first means (17) of translational motion of said blades in a first direction (X) identified as the direction toward a facing conveyor belt or storage shelf, and second means (18) of translational motion in a second direction (Y) identified as the direction at right angles to said first direction (X) of mutual approach of the blades (15, 16) for the gripping of one or more parallelepipedal or cylindrical bodies, and of mutual distancing for the releasing of said parallelepipedal or cylindrical bodies once they have been loaded or unloaded from the supporting plate (13), said manipulator (10) being **characterized in that** said clamp-like grip device (12) has
- a first high-rigidity grip blade (15), which performs a translational motion only in the first direction (X) by way of first means of translational motion (17),
- a second grip blade (16), which is also high-rigidity, is thinner than the first blade, and is translationally moveable both in the first direction (X) together with said first blade (15), with said first means of translational motion (17), and in the second direction (Y) toward or away from said first blade (15), by said second means of translational motion (18),
said second blade (16) being able to rotate, with rotation means (19), about a pivot (20) thereof with an axis that is substantially perpendicular to the plane defined by said first direction (X) and said second direction (Y), said rotation means (19) being supported by the second means of translational motion (18) along said second direction (Y).

2. The manipulator according to claim 1, **characterized in that** said second blade (16) is made of a material with high resistance to flexure, and is approximately half as thick as said first blade (15).

3. The manipulator according to claim 2, **characterized in that** said second blade (16), at a portion of the free end (16) thereof, has a grip area (22) with increased grip.

4. The manipulator according to one or more of the preceding claims, **characterized in that** the rotation means (19) are constituted by a maneuvering bar (23) which is elongated radially from said pivot (20), the second blade (16) being fixed to said pivot (20) in a cantilever fashion and by interposition of a supporting bracket (24), the maneuvering bar (23) being rotated by corresponding linear actuation means.

5. The manipulator according to claim 4, **characterized in that** said linear actuation means are constituted by pusher means (25), which are electrically motorized and are adapted to act on said maneuvering bar (23) in order to rotate said second blade (16), elastic contrast means being provided for the return of said maneuvering bar (23) to the position in which the second blade (16) is parallel to the first blade (15).

6. The manipulator according to claim 5, **characterized in that** said pusher means (25) comprise a threaded pusher bar (26), with a hemispherical head (27), which is made to translationally move by a female-thread rotor element (28), which is internally threaded complementarily to the threading of said pusher bar (26) and is rotated by an associated electric motor (29), rotation-preventing means being associated with said pusher bar (26) in order to prevent its rotation about its own longitudinal axis.

7. The manipulator according to claim 6, **characterized in that** said rotation-preventing means of the pusher bar (26) are constituted
- by a flattened portion (30) of said pusher bar (26) which is proximate to the hemispherical head (27) and is adapted to slide on a corresponding rotation-preventing surface provided by a flat face (31) of a plate (32) which is fixed to a first flange (33) that supports said electric motor (29),
- and, at the opposite end of the pusher bar (26), by at least one radial pin (34) that passes through said pusher bar (26) and is arranged so as to perform a translational motion in a corresponding guiding slot (36) defined on a second flange (37), which is fixed to the body of the electric motor (29) on the opposite side with respect to said first flange (33).

8. The manipulator according to one or more of claims 5-7, **characterized in that** said elastic contrast means for the return of said maneuvering bar (23) to the position in which the second blade (16) is parallel to the first blade (15) are constituted by a traction spring (38), which is interposed between said first flange (33) and said maneuvering bar (23).

9. The manipulator according to one or more of the preceding claims, **characterized in that** means (39) for indicating that the mutually parallel arrangement of said first blade (15) and said second blade (16) has been restored are associated with said maneuvering bar (23).

10. The manipulator according to one or more of the preceding claims, **characterized in that** said first means of translational motion (17) for said blades (15, 16) in said first direction (X) are constituted by two mutually opposite lateral sliders (45, 46), which are joined by a transverse element and are adapted to perform a translational motion on corresponding lateral guides (47, 48) that run in parallel on two opposite sides of the plate (13), means for movement in said first direction (X) being associated with one of said lateral guides (48), said second means of translational motion (18) being defined by a third slider (50), on which said second blade (16) is mounted with the respective rotation means (19), said third slider (50) being arranged so as to perform a translational motion on an additional third corresponding guide (51), which is transverse to the first two guides (47, 48) and defines said transverse element for joining said two first guides, corresponding means for movement in the second direction (Y) on said third guide (51) being associated with said third slider (50).

## Patentansprüche

1. Ein Manipulator (10) zur Handhabung insbesondere von im Wesentlichen quaderförmigen oder zylindrischen Körpern in einem automatisierten Speichersystem (11), von der Art, die eine klemmenartige Greifvorrichtung (12) aufweist, welche zuvor auf einer Platte (13) zum Tragen zu transportierender quaderförmiger oder zylindrischer Körper angebracht wird, wobei die Platte (13) wiederum von einem Aufbau (14) zum Bewegen des Manipulators (10) getragen wird, wobei die klemmenartige Vorrichtung (12) Folgendes aufweist: zwei einander gegenüberliegende Flügel (15, 16), erste Mittel (17) für die Translationsbewegung der Flügel in eine erste Richtung (X), die bestimmt wird als die Richtung zu einem gegenüberliegenden Förderband oder Lagerregal hin, und zweite Mittel (18) für die Translationsbewegung in eine zweite Richtung (Y), die bestimmt wird als die Richtung in rechten Winkeln zu der ersten Richtung (X) gegenseitiger Annäherung der Flügel (15, 16) zum Greifen eines oder mehrerer quaderförmiger oder zylindrischer Körper, und gegenseitigen Auseinanderbewegens zum Loslassen der quaderförmigen oder zylindrischen Körper, sobald sie auf die oder von der Stützplatte (13) geladen oder abgeladen wurden, wobei der Manipulator (10) **dadurch gekennzeichnet ist, dass** die klemmenartige Greifvorrichtung (12) Folgendes hat:
- einen ersten Spannflügel (15) mit hoher Steifigkeit, der eine Translationsbewegung nur in die erste Richtung (X) mit Hilfe erster Mittel (17) zur Translationsbewegung durchführt,
- einen zweiten Spannflügel (16), ebenfalls mit hoher Steifigkeit, der dünner ist als der erste Flügel und translatorisch beweglich ist, sowohl in die erste Richtung (X) gemeinsam mit dem ersten Flügel (15), mit den ersten Mitteln (17) zur Translationsbewegung, als auch in die zweite Richtung (Y) zu dem ersten Flügel (15) hin oder von ihm fort, mit Hilfe der zweiten Mittel (18) für Translationsbewegung,
wobei der zweite Flügel (16) sich, mit Rotationsmitteln (19), um einen Drehzapfen (20) davon mit einer Achse drehen kann, die im Wesentlichen senkrecht zu der Ebene ist, die von der ersten Richtung (X) und der zweiten Richtung (Y) bestimmt wird, wobei die Rotationsmittel (19) von den zweiten Mitteln (18) für Translationsbewegung entlang der zweiten Richtung (Y) getragen werden.

2. Der Manipulator gemäß Anspruch 1, **dadurch gekennzeichnet, dass** der zweite Flügel (16) aus einem Material mit hohem Widerstand gegenüber Durchbiegung besteht und ungefähr halb so dick ist wie der erste Flügel (15).

3. Der Manipulator gemäß Anspruch 2, **dadurch gekennzeichnet, dass** der zweite Flügel (16) an einem Teil des freien Endes (16) davon einen Griffbereich (22) mit erhöhtem Griff hat.

4. Der Manipulator gemäß einem oder mehreren der obigen Ansprüche, **dadurch gekennzeichnet, dass** die Rotationsmittel (19) in einer Manövrierstange (23) bestehen, die radial von dem Drehzapfen (20) verlängert ist, wobei der zweite Flügel (16) an dem Drehzapfen (20) freitragend und durch Anordnung eines Stützwinkels (24) dazwischen befestigt ist, wobei die Manövrierstange (23) von entsprechenden linearen Betätigungsmitteln gedreht wird.

5. Der Manipulator gemäß Anspruch 4, **dadurch gekennzeichnet, dass** die linearen Betätigungsmittel in Schubmitteln (25) bestehen, die elektrisch motorisiert und ausgebildet sind, um auf die Manövrierstange (23) einzuwirken, um den zweiten Flügel (16) zu drehen, wobei elastische Kontrastmittel für die Rückkehr der Manövrierstange (23) in die Position, in der der zweite Flügel (16) parallel zum ersten Flügel (15) ist, bereitgestellt sind.

6. Der Manipulator gemäß Anspruch 5, **dadurch gekennzeichnet, dass** die Schubmittel (25) eine mit einem Gewinde versehene Schubstange (26) mit einem halbkugelförmigen Kopf (27) aufweisen, die von einem Rotorelement (28) mit Innengewinde, das komplementär zu dem Gewinde der Schubstange (26) innen mit einem Gewinde versehen ist und von einem dazugehörigen Elektromotor (29) gedreht wird, in eine Translationsbewegung versetzt wird, wobei eine Rotation verhindernde Mittel mit der Schubstange (26) verbunden sind, um ihre Drehung um ihre eigene Längsachse zu verhindern.

7. Der Manipulator gemäß Anspruch 6, **dadurch gekennzeichnet, dass** die eine Rotation verhindernden Mittel der Schubstange (26) aus Folgendem bestehen:
- einem abgeflachten Abschnitt (30) der Schubstange (26), der nahe dem halbkugelförmigen Kopf (27) liegt und ausgebildet ist, um auf einer entsprechenden eine Rotation verhindernden Oberfläche zu gleiten, die von einer flachen Fläche (31) einer Platte (32) bereitgestellt wird, welche an einem ersten Flansch (33) befestigt ist, der den Elektromotor (29) trägt,
- und, am gegenüberliegenden Ende der Schubstange (26), aus mindestens einem radialen Stift (34), der durch die Schubstange (26) verläuft und angeordnet ist, um eine Translationsbewegung in einem entsprechenden Führungsschlitz (36) durchzuführen, der in einem zweiten Flansch (37) geformt ist, welcher am Körper des Elektromotors (29) auf der dem ersten Flansch (33) gegenüberliegenden Seite befestigt ist.

8. Der Manipulator gemäß einem oder mehreren der Ansprüche 5-7, **dadurch gekennzeichnet, dass** die elastischen Kontrastmittel für die Rückkehr der Manövrierstange (23) in die Position, in welcher der zweite Flügel (16) parallel zum ersten Flügel (15) ist, aus einer Zugfeder (38) bestehen, die zwischen dem ersten Flansch (33) und der Manövrierstange (23) angeordnet ist.

9. Der Manipulator gemäß einem oder mehreren der obigen Ansprüche, **dadurch gekennzeichnet, dass** Mittel (39) zum Anzeigen, dass die Anordnung des ersten Flügels (15) und des zweiten Flügels (16) parallel zueinander wiederhergestellt wurde, mit der Manövrierstange (23) verbunden sind.

10. Der Manipulator gemäß einem oder mehreren der obigen Ansprüche, **dadurch gekennzeichnet, dass** die ersten Mittel (17) zur Translationsbewegung für die Flügel (15, 16) in die erste Richtung (X) in zwei einander gegenüberliegenden seitlichen Schiebern (45, 46) bestehen, die durch ein transversales Element verbunden und ausgebildet sind, um eine Translationsbewegung auf entsprechenden seitlichen Führungen (47, 48) durchzuführen, die sich parallel auf zwei gegenüberliegenden Seiten der Platte (13) erstrecken, wobei Mittel zur Bewegung in die erste Richtung (X) mit einer der seitlichen Führungen (48) verbunden sind und die zweiten Mittel zur Translationsbewegung (18) von einem dritten Schieber (50) gebildet werden, auf dem der zweite Flügel (16) mit den entsprechenden Rotationsmitteln (19) montiert ist, wobei der dritte Schieber (50) angeordnet ist, um eine Translationsbewegung auf einer zusätzlichen entsprechenden dritten Führung (51) durchzuführen, die transversal zu den zwei ersten Führungen (47, 48) ist und das transversale Element zur Verbindung der zwei ersten Führungen bildet, wobei entsprechende Mittel zur Bewegung in die zweite Richtung (Y) auf der dritten Führung (51) mit dem dritten Schieber (50) verbunden sind.

## Revendications

1. Manipulateur (10) pour la manutention, en particulier, de corps sensiblement parallélépipédiques ou cylindriques dans un système de stockage automatisé (11), du type comportant un dispositif de préhension (12) à serrage, qui est préalablement installé sur une plaque (13) servant à supporter des corps parallélépipédiques ou cylindriques à transporter, ladite plaque (13) étant elle-même supportée par un système (14) servant à déplacer ledit manipulateur (10), ledit dispositif à serrage (12) comprenant deux lames mutuellement opposées (15, 16), un premier moyen de déplacement en translation (17) desdites lames dans une première direction (X) identifiée comme direction vers un tapis roulant ou une étagère de stockage en regard, et un second moyen de déplacement en translation (18) dans une seconde direction (Y) identifiée comme direction perpendiculaire à ladite première direction (X) d'approche mutuelle des lames (15, 16) pour la préhension d'un ou de plusieurs corps parallélépipédiques ou cylindriques, et d'éloignement mutuel pour la libération desdits corps parallélépipédiques ou cylindriques une fois qu'ils ont été chargés sur ou déchargés depuis la plaque de support (13), ledit manipulateur (10) étant **caractérisé en ce que** le dispositif de préhension (12) à serrage a
- une première lame de préhension très rigide (15) qui exécute un mouvement de translation uniquement dans la première direction (X) à l'aide du premier moyen de déplacement en translation (17),
- une seconde lame de préhension (16), très rigide elle aussi, qui est plus mince que la première lame et est mobile en translation à la fois dans la première direction (X) conjointement avec ladite première lame (15), avec ledit premier moyen de déplacement en translation (17) et dans la seconde direction (Y) vers ou depuis ladite première lame (15), sous l'action dudit second moyen de déplacement en translation (18),
ladite seconde lame (16) étant apte à tourner, à l'aide de moyens de rotation (19), autour d'un pivot (20) de celle-ci à axe sensiblement perpendiculaire au plan défini par ladite première direction (X) et ladite seconde direction (Y), lesdits moyens de rotation (19) étant supportés dans ladite seconde direction (Y) par le second moyen de déplacement en rotation (18).

2. Manipulateur selon la revendication 1, **caractérisé en ce que** ladite seconde lame (16) est en matière à grande résistance à la flexion et a une épaisseur à peu près inférieure de moitié à celle de ladite première lame (15).

3. Manipulateur selon la revendication 2, **caractérisé en ce que** ladite seconde lame (16) a, dans une partie de son extrémité libre (16), une zone de préhension (22) à préhension accrue.

4. Manipulateur selon une ou plusieurs des revendications précédentes, **caractérisé en ce que** les moyens de rotation (19) sont constitués par une barre de manoeuvre (23) allongée radialement depuis ledit pivot (20), la seconde lame (16) étant fixée audit pivot (20) en porte-à-faux et par l'intermédiaire d'une équerre de support (24), la barre de manoeuvre (23) tournant sous l'action de moyens d'actionnement linéaire correspondants.

5. Manipulateur selon la revendication 4, **caractérisé en ce que** lesdits moyens d'actionnement linéaire sont constitués par des moyens de poussée (25) animés par un moteur électrique et conçus pour agir sur ladite barre de manoeuvre (23) afin de faire tourner ladite seconde lame (16), des moyens élastiques antagonistes étant prévus pour le rappel de ladite barre de manoeuvre (23) dans la position dans laquelle la seconde lame (16) est parallèle à la première lame (15).

6. Manipulateur selon la revendication 5, **caractérisé en ce que** lesdits moyens de poussée (25) comprennent une barre de poussée filetée (26), à tête hémisphérique (27), amenée à se déplacer en translation par un élément formant rotor (28) à filetage femelle, dont le filetage intérieur est complémentaire du filetage de ladite barre de poussée (26) et tourne sous l'action d'un moteur électrique correspondant (29), des moyens de prévention de rotation étant associés à ladite barre de poussée (26) afin d'empêcher celle-ci de tourner autour de son propre axe longitudinal.

7. Manipulateur selon la revendication 6, **caractérisé en ce que** lesdits moyens de prévention de rotation de la barre de poussée (26) sont constitués
- par une partie aplatie (30) de ladite barre de poussée (26) située tout près de la tête hémisphérique (27) et conçue pour coulisser sur une surface correspondante de prévention de rotation présentée par une face plane (31) d'une plaque (32) fixée à une première bride (33) qui supporte ledit moteur électrique (29),
- et, à l'extrémité opposée de la barre de poussée (26), par au moins un doigt radial (34) qui passe à travers ladite barre de poussée (26) et est conçu pour effectuer un mouvement de translation dans une fente de guidage correspondante (36) ménagée dans une seconde bride (37) fixée au corps du moteur électrique (29) sur le côté opposé à ladite première bride (33).

8. Manipulateur selon une ou plusieurs des revendications 5 à 7, **caractérisé en ce que** lesdits moyens élastiques antagonistes pour le rappel de ladite barre de manoeuvre (23) dans la position dans laquelle la seconde lame (16) est parallèle à la première lame (15) sont constitués par un ressort de traction (38) intercalé entre ladite première bride (33) et ladite barre de manoeuvre (23).

9. Manipulateur selon une ou plusieurs des revendications précédentes, **caractérisé en ce que** des moyens (39) servant à indiquer que le parallélisme mutuel de ladite première lame (15) et de ladite seconde lame (16) a été rétabli sont associés à ladite barre de manoeuvre (23).

10. Manipulateur selon une ou plusieurs des revendications précédentes, **caractérisé en ce que** lesdits premiers moyens de déplacement en translation (17) dans ladite première direction(X)pour lesdites lames (15, 16) sont constitués par deux coulisseaux latéraux mutuellement opposés (45, 46) réunis par un élément transversal et conçus pour exécuter un mouvement de translation sur des guides latéraux correspondants (47, 48) qui s'étendent parallèlement sur deux côtés opposés de la plaque (13), des moyens pour un déplacement dans ladite première direction (X) étant associés à l'un desdits guides latéraux (48), lesdits seconds moyens -de déplacement en translation (18) étant définis par un troisième coulisseau (50), sur lequel ladite seconde lame (16) est montée avec les moyens de rotation respectifs (19), ledit troisième coulisseau (50) étant conçu de manière à exécuter un mouvement de translation sur un troisième guide supplémentaire correspondant (51), qui est transversal par rapport aux deux premiers guides (47, 48) et définit ledit élément transversal pour réunir lesdits deux premiers guides, des moyens correspondants pour le déplacement dans la seconde direction (Y) sur ledit troisième guide (51) étant associés audit troisième coulisseau (50).
